# EUROPEAN PATENT APPLICATION

(11) **EP 1 650 718 A2**
(43) Date of publication of application: **26.04.2006**
(21) Application number: 05017039.8
(22) Date of filing: 05.08.2005
(51) Int. Cl.: G07F 17/32

(54) **Apparatus for playing horse racing game**

(30) Priority: 20.10.2004 KR 2004083852
(71) Applicant: ACE A&G Co., Ltd., Seoul (KR)
(72) Inventor: Shin, Dong Won, Wonmi-gu Bucheon-shi (KR)
(74) Representative: Sawodny, Michael-Wolfgang

(57) **Abstract**

A horse racing game apparatus is disclosed, in which a user can easily check a racing information, a statistic information, etc. related with a horse racing and can enjoy a horse racing game in a 3D like an actual horse racing at a horse racing track. The users can play the horse racing game on a large size screen in a 3D like an actual horse racing track, so that high quality services can be provided to the users as compared to the conventional horse racing game apparatus. Various demands of the users which play the horse racing game can be satisfied. As a result, the service company and the development company of the horse racing game can achieve high profits.

## Description

### BACKGROUND OF THE INVENTION

### 1. Field of the Invention

The present invention relates to a horse racing game apparatus, and in particular to a horse racing game apparatus in which a user can easily check a racing information, a statistic information, etc. related with a horse racing and can enjoy a horse racing game in a 3D like an actual horse racing at a horse racing track.

### 2. Description of the Background Art

As the standard of life rises, many people have big interests in leisure. Various leisure such as travel, tour, sports, recreation, game, etc. have been enjoyed by people.

Among the above leisure, a horse racing has a long history since a human history had begun. In addition, the horse racing has been grown together with a human history as one of the most familiar sports. Recently, the horse racing has been developed so that people can enjoy at an arcade game room without directly visiting the horse racing track.

The horse racing game used by common people at the arcade game room has been widely used throughout the nation. The apparatus for a horse racing game has been developed so that people can enjoy with reality and dynamic motion of a horse racing.

However, the conventional horse racing game apparatus is a simple arcade type horse racing game, not a horse racing game with a network system technology. It is impossible to achieve a horse racing game with reality and dynamic motion like an actual horse racing. Only basic estimated information related with a dividend rate is provided to the users which use the game. Namely, reality-high information such as various statistic data related with recent racing, various statistic information concerning dividend rate are not provided to the users.

### SUMMARY OF THE INVENTION

Accordingly, it is an object of the present invention to overcome the above-described problems encountered in the conventional art.

It is another object of the present invention to provide an apparatus for playing a horse racing game in which a user, which enjoys a horse racing game, can easily obtain horse racing information related with a horse racing statistic information, etc. and can play a horse racing game in a 3D using a large size screen like an actual horse racing track.

To achieve the above objects, there is provided an apparatus for playing a horse racing game, comprising a local network communication network in which various data related with a racing information, a probability information, a horse racing game guide, a racing screen and a racing broadcast, which are related with a horse racing game, are communicated; a plurality of terminal apparatuses in which a betting point is disposed based on a bill and coins inputted by users which uses a horse racing game, and a racing information, a probability information, etc. related with a horse racing game transferred through the local network communication network is displayed on a screen, and a betting information based on the operations of the users which check a racing information, a probability information, etc. related with the horse racing game is transmitted to the outside through the local network communication network; and a winning state and a process result based on the betting of the users are displayed on a screen based on a result of the game transmitted to the outside, and a discharge of a product coupon/coin is performed based on an operation of the user which has a certain point as a result of the game; a central control computer in which various racing information and probability information such as a start horse information, a horse information, an environment information, a recent racing information and a statistic information related with probability and dividend are stored in a database, and when a new racing starts, a racing information, a probability information, etc. related, with a horse racing game are transmitted to the terminal apparatuses through the local network communication network and the betting information of the users which play a horse racing game transferred from the terminal apparatuses through the local network communication network are accumulated and stored, and when a betting of each user is finished, the racing starts, and the outputs of the screen information and racing broadcast are controlled based on the racing path, and when the racing is finished, a result of the game is transferred to each terminal apparatus, and a winning state based on the betting of each user is automatically determined; a display unit, formed of a large size wide screen, in which a racing information, a probability information, etc. related with a horse racing game is displayed on a screen in accordance with the central control computer, and when the racing starts, a screen information based on a racing path transferred from the central control computer is displayed on the screen; and a sound output unit in which various guide information related with the horse racing game and a racing broadcast information after the racing starts are outputted through speakers.

### BRIEF DESCRIPTION OF THE DRAWINGS

The present invention will become better understood with reference to the accompanying drawings which are given only by way of illustration and thus are not limitative of the present invention, wherein;
Figure 1 is a schematic view illustrating a construction of a horse racing game apparatus according to the present invention;
Figure 2 is a perspective view illustrating a terminal apparatus of Figure 1;
Figure 3 is a block diagram illustrating a construction of a terminal of Figure 1;
Figure 4 is a block diagram illustrating a construction of a central control computer of Figure 1;
Figure 5 is a flow chat of an operation of a horse racing game apparatus according to the present invention; and
Figures 6 through 9 are views illustrating horse information, environment information, recent racing information, and statistic information displayed at each terminal.

### DETAILED DESCRIPTION OF THE PREFERRED EMBODIMENTS

The horse racing game apparatus according to the present invention will be described with reference to the accompanying drawings.

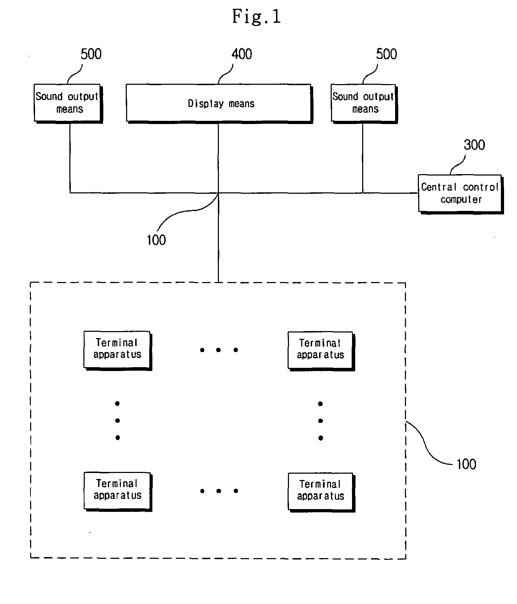

Figure 1 is a schematic view illustrating a construction of a horse racing game apparatus according to the present invention.

As shown therein, a local network communication network 100 communicates various data related with horse racing information, probability information, a horse racing game guide, a racing screen and a racing broadcast using a plurality of terminal apparatuses 200, a central control computer 300, a display unit 400, and a sound output unit 500.

Here, the terminal apparatuses 200 are connected with the central control computer 300 through the local network communication network 100 The terminal apparatuses 200 display points (namely, credits) which are stored with the inputs of bills or coins by a game user and are betted with the stored points. In addition, when a racing game is set, racing information, probability information, etc., which are related with a horse racing game, are displayed on the screen. The betting information set by the user is transferred to the central control computer 300 through the local network communication network 100 in accordance with an operation of a user which wants to confirm the racing information, probability information, etc related with the horse racing game. A win and a result of the game, which are determined based on the betting of the users, are displayed on the screen in accordance with a result of the game transferred from the central control computer 300. The product coupon/coin determined based on the user's operation which obtained a certain point as a result of the game is discharged.

The central control computer 300 has database formed of various racing information and statistic information such as start horse information, horse information, environment information, recent racing information, and probability information related with probability, and dividend. When a new racing starts, the racing information, probability information, etc. related with the horse racing game are transferred to the terminal apparatuses 200 through the local network communication network 100. The betting information of the users which play the horse racing fame are accumulated from the terminal apparatuses 200 through the local network communication network 100 and are stored. When the betting by each user is finished, the racing starts. The screen information and racing broadcast information based on the racing track are outputted on the display unit 400 and the sound output unit 500. When the racing is finished, a result data of the game is transferred to each terminal apparatus 200, so that the prize winning is automatically determined based on the betting of each user.

At this time, the central control computer 300 provides various racing information such as a low level (horse information), a middle level (environment information, jockey information), a high level (actual racing type recent racing information, statistic recording information), so that the users accurately analyze the information with summarized and graphic data and bet the racing game, In addition, the central control computer 300 provides system initial probability, accumulated probability and current probability concerning the winning rate and dividend rate, so that any fake is prevented for thereby achieving an optimum pay-back rate (for example, 88%).

The central control computer 300 provides a certain racing level and difficulty and classifies the racing into a common racing, a high-class horse racing, etc. The pay-back bonus system of the non-winning money is adapted, so that the users do not get tedious, and the reliability is enhanced. Various racing methods such as single win, series win, double win, pair win, triple win, etc. so that user's various demands are met.

The display unit 400 includes a targe wide size screen and displays racing information, probability information, etc related with the horse racing game transferred from the central control computer 300 through the local network communication network 100. When the racing starts, the screen information related with the racing track transferred from the central control computer 300 is displayed on the screen.

At this time, the display unit 400 displays the information with 3D animation images. Special visual effects such as footprint, sand dust, rain, whipping action, shadow, waterfall, etc. are displayed, so that the user can feel an actual horse racing track. The horse racing track information of Seoul horse racing track, Japan horse racing track (Kyushu) or Kosung horse racing track (Belin) is provided.

Through speakers, the sound output unit 500 outputs various guide information related with the horse racing game and racing broadcast information after the start of racing which are transferred from the central control computer 300 through the local network communication network 100.

At this time, dynamic surround 3D sounds are outputted through the sound output unit 500. Various racing background music is outputted in a MP3 form, so that the game players do not get tedious.

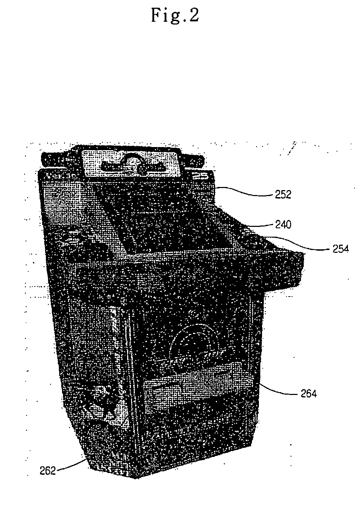

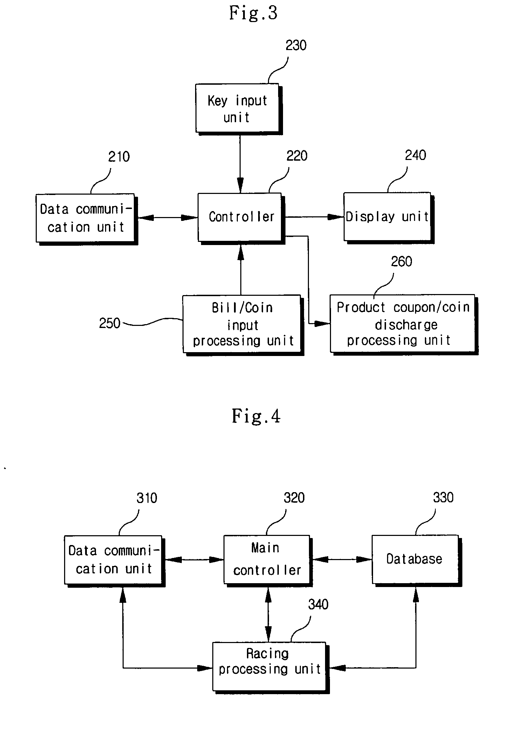

Figure 2 is a perspective view of the terminal apparatus 200 of Figure 1, and Figure 3 is a block diagram illustrating the construction of the terminal apparatus 200.

As shown therein, a data communication unit 210 is connected and communicates with the central control computer 300 through the local network communication network 100 and performs the inputs of racing information, probability information, etc related with the horse racing game, the outputs of the betting information based on a user's operation, and the inputs of a result data of the horse racing game with the central control computer 300 in accordance with a control of a controller 220.

The controller 220 controls the displays of the points used for the betting based on the bills or coins that the game users input through a bill input slit 252 or a coin input slit 254. The controller 220 controls the display of the racing information, probability information, etc. related with the horse racing game inputted from the center control computer 300 through a data communication unit 210 and controls that the betting information based on the user's operation which play the horse racing game is outputted to the central control computer 300. In addition, the controller 220 controls that the winning and a result process of the winning based on the user's betting are displayed on the screen based on a result data inputted from the central control computer 300 through the data communication unit 210. The controller 220 controls that a certain product coupon/coin is outputted through a product coupon discharge slit 262 or a coin discharge slit 264 based on the operation of the user which has a certain point.

The key input unit 230 outputs horse racing information based on the operations of the users which play the horse racing game, various key signals for probability information confirmation and key signals related with the betting to the controller 220, and outputs key signals for a pay-back of the product coupons/coins based on the operations of the users which play the horse racing game to the controller 220.

The display unit 240 is formed of a common monitor and displays racing information, probability information, etc on the screen, which are inputted from the central control computer 300, on the screen in accordance with a control of the controller 220, and when the horse racing game is finished, the display unit 240 displays a result data of the horse racing game, and a winning state and a result of the process based on the betting of each user on the screen when the horse racing game is finished, so that the users can confirm.

A bill/coin input processing unit 250 checks the information of bills or coins inputted through the bill input slit 252 or the coin input slit 254 by the users which play the horse racing game and outputs to the controller 220.

A product coupon/coin discharge processing unit 260 controls that the product coupons/coins requested by the users, which has a certain point, are discharged through the product coupon discharge slit 262 or the coin discharge slit 264 in accordance with a control of the controller 220.

Figure 4 is a block diagram illustrating the construction of the central control computer 300 of Figure 1.

As shown therein, the data communication unit 310 processes the outputs of the racing information, probability information, etc., the inputs of the betting information based on the operations of the users, and the outputs of a result data of the horse racing game in accordance with a control of a main controller 320 in cooperation with the terminal apparatuses 200 connected with the local network communication network 100. In addition, the data communication unit 310 outputs the racing information and probability information related with the horse racing game and the racing tracks after the racing starts to the display unit 400 connected with the local network communication network 100. The data communication unit 310 outputs various guide information related with the horse racing game and racing broadcast information after the racing starts to the sound output unit 500 connected with the local network communication network 100.

The main controller 320 controls that various racing information and probability information such as start racing horse information, horse information, environment information, recent racing information and statistic information related with probability and dividend are outputted to the terminal apparatuses 200 through the data communication unit 310 when a new racing starts. The main controller 320 controls that the betting information of the users, which play the horse racing game, transferred from the terminal apparatus 200 through the data communication unit 310 are accumulated and stored. The main controller 320 controls that when the betting of each user is finished, and then the racing starts, the screen information based on the racing track and racing broadcasting information are outputted to the display unit 400 and the sound output unit 500.

The database 330 stores therein various racing information and probability information such as start racing horse information, horse information, environment information, recent racing information and statistic information related with probability and dividend, which are provided to the horse racing game users, and stores therein various racing track information needed for the management of the horse racing game, and screen information and racing broadcast information based on the racing tracks.

The racing processing unit 340 stores a simulation program therein for the management of the horse racing game and performs a simulation of the horse racing game with various racing track information, screen information based on racing path, and racing broadcast information stored in the database 330 by driving the simulation program in accordance with a control of the main controller 320.

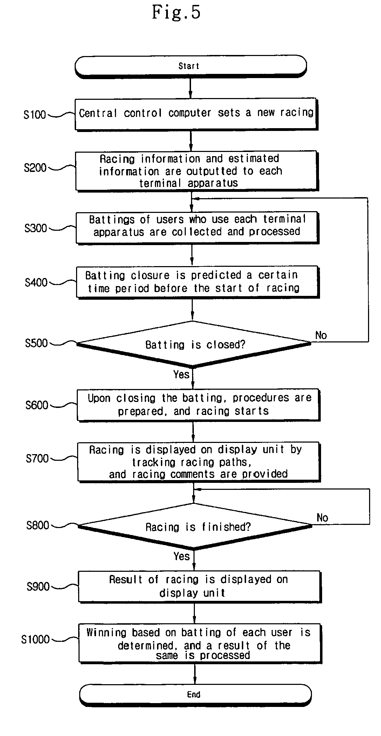

The operations of the horse racing game apparatus according to the present invention will be described with reference to Figures 5 through. 9.

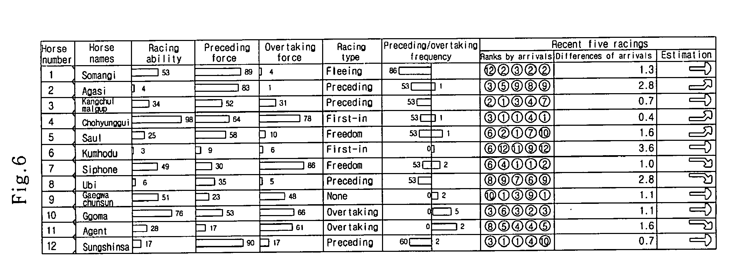

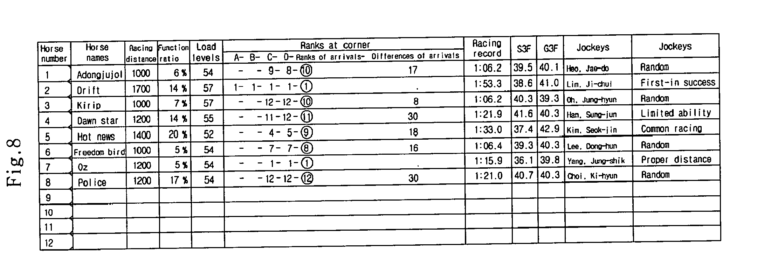

Figure 5 is a flow chat of an operation of a horse racing game apparatus according to the present invention, and Figures 6 through 9 are views illustrating horse information, environment information, recent racing information, and statistic information displayed at each terminal.

When the racing teams are set, the central control computer 3001 provides preliminany racing information on the display unit 400 and prepares the output of the racing information, which will be transferred to each terminal apparatus 200 used by the users in Step 100.

The central control computer 300 provides various racing information and estimated information related to a newly set racing game to each terminal apparatus 200 through the local network communication network 100.

At this time, as shown in Figures 6 through 9, various racing information and estimated information provided from the central control computer 300 are horse information, environment information, recent racing information and statistic information related with probability and dividend.

As shown in Figure 6, the horse information includes horse numbers sequentially given based on the number of start racing horses, names of horses, running abilities corresponding to total ability judging indexes (minimum 0, maximum 99) of racing horses, a preceding power which represents an initial speed of a racing horse, an overtaking power which represents a latter stamina of a racing horse, a running habit, receding/overtaking frequency which represents a running habit of a racing horse such as fleeing, preceding, first-in, overtaking, freedom, obscurity, etc., finishing line ranks of recent five racings, finishing line differences of recent five racings which the finish line differences with respect to the rank 1 are computed by the unit of seconds, and results of recent five racings (sharp up; up, common, down; sharp down).

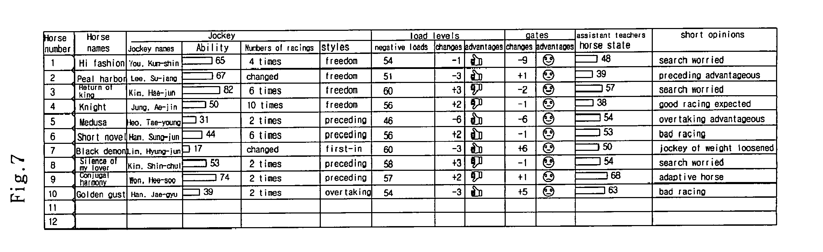

The environment information includes names of jockeys, current jockeys' abilities indicated with ability judgment indexes (minimum 0, maximum 99), total accumulated racing numbers of racing horses, jockeys' features corresponding to racing styles of jockeys (preceding, first-in, overtaking, freedom, etc.), load weights (for example, 48~63kg), load weight change representing a change degree as compared to the current racing with respect to the load weights, load weight evaluation corresponding to the total evaluation (good, common, bad) with respect to the load weights and load weight changes, a gate change corresponding to the change degree as compared to the current racing with respect to the horse numbers, assistant horse states indicated with ability judgment indexes (minimum 0, maximum 99) with respect to early morning training and horse states, and short opinions corresponding to the total horse short opinions obtained by analyzing racing environment advantages/disadvantages of racing horses (Figure 7).

The recent racing information includes a racing distance corresponding to a corresponding racing distance with respect to the recent racing results, a function ratio which is expressed with the recent racing results, a load weight with respect to the recent racing results, a rank at the corner A which represents a corner-1 passing rank of the racing distance with respect to the recent racing results, a rank at the corner B which represents a corner-2 passing rank of the racing distance with respect to the recent racing results, a rank at the corner C which represents a corner-3 passing rank of the racing distance with respect to the recent racing results, a rank at the corner D which represents a corner-4 passing rank of the racing distance with respect to the recent racing results, the final rank (final finishing) which represents the final finishing rank of the racing distance with respect to the recent racing results, a finishing difference which represents a finishing rank computed with the recent racing records with respect to the rank 1, a running record with respect to the recent racing results, a S3F which represents a time (initial preceding power) for 600m after the start with respect to the recent racing records, a G3F which represents a time (latter overtaking power) for 600m before the finish with respect to the recent racing records, jockeys with respect to the recent racing results, and a trip which represents the total racing evaluation with respect to the recent racing records for an advantage/disadvantage evaluation during the racing.

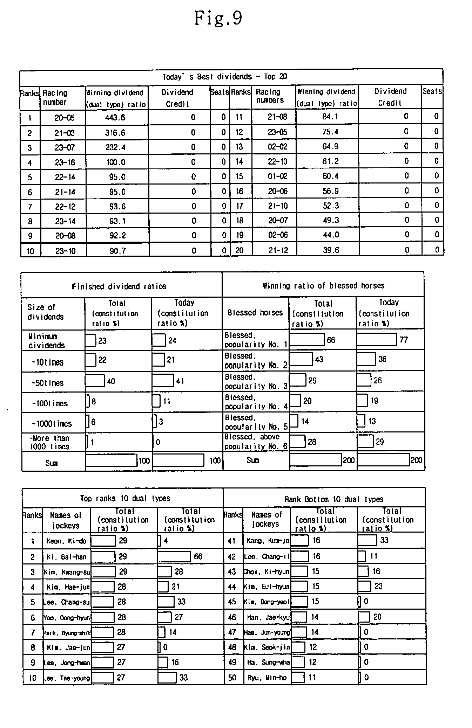

The statistic information includes a today's highest dividend in which today's highest winning dividend, winning money, and winning seat number are arranged in their size sequences, a today's jockey record in which a jockey-based total double winning ratio and a today's real time double winning ratio are arranged in their size sequences, a determined dividend ratio which represents a dividend size-based distribution with respect to the determined dividend and a dividend distribution determined in real time, winnings (ranks 1 and 2) of a double type blessed horse with respect to the sequences of popularities; and a blessed winning ratio which represents a today's winning ratio (Figure 9).

In the step S200, various racing information and estimated information are provided to each terminal apparatus 200. The central control computer 300 collects and stores the betting information based on the operations of the users which use each terminal apparatus 200 in which various racing information and estimated information are checked (S300). A betting closing information is outputted through the sound output unit 500 before the racing start time (S400).

The central control computer 300 judges whether it is the betting closing time or not (S500). When it is the betting closing time, the betting by the users is finished, and a racing procedure is prepared, and the racing starts (S600).

When the racing starts, the central control computer 300 traces the racing path and displays the images with respect to the current racing on the display unit 400 in a 3D animation and outputs an audio data with respect to the racing broadcast through the sound output unit 500 (Step S700).

The central control computer 300 judges whether the racing is ended or not after a certain time period is passed in Step S800. When the racing is ended, the result data based on the racing are displayed on the display unit 400 and are provided to each terminal apparatus 200 (Step S900).

Each terminal apparatus 200 performs the winning states and results (namely, product coupon/coin discharges based on the points obtained) with respect to the users' betting with the result data transferred from the central control computer 300, and then the racing is finished (S1000)

As described above, in the horse racing game apparatus according to the present invention, the users can get very real information such as real horse and jockey information related with horse racing, various statistic data related with the recent racing, and various probability information concerning dividend on individual terminal apparatuses. The users can play the horse racing game on a large size screen in a 3D like an actual horse racing track, so that high quality services can be provided to the users as compared to the conventional horse racing game apparatus. Various demands of the users which play the horse racing game can be satisfied. As a result, the service company and the development company of the horse racing game can achieve high profits.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. An apparatus for playing a horse racing game, comprising:
a local network communication network in which various data related with a racing information, a probability information, a horse racing game guide, a racing screen and a racing broadcast, which are related with a horse racing game, are communicated;
a plurality of terminal apparatuses in which a betting point is disposed based on a bill and coins inputted by users which uses a horse racing game, and a racing information, a probability information, etc. related with a horse racing game transferred through the local network communication network is displayed on a screen, and a betting information based on the operations of the users which check a racing information, a probability information, etc. related with the horse racing game is transmitted to the outside through the local network communication network; and a winning state and a process result based on the betting of the users are displayed on a screen based on a result of the game transmitted to the outside, and a discharge of a product coupon/coin is performed based on an operation of the user which has a certain point as a result of the game;
a central control computer in which various racing information and probability information such as a start horse information, a horse information, an environment information, a recent racing information and a statistic information related with probability and dividend are stored in a database, and when a new racing starts, a racing information, a probability information, etc. related with a horse racing game are transmitted to the terminal apparatuses through the local network communication network, and the betting information of the users which play a horse racing game transferred from the terminal apparatuses through the local network communication network are accumulated and stored, and when a betting of each user is finished, the racing starts, and the outputs of the screen information and racing broadcast are controlled based on the racing path, and when the racing is finished, a result of the game is transferred to each terminal apparatus, and a winning state based on the betting of each user is automatically determined;
a display means, formed of a large size wide screen, in which a racing information, a probability information, etc. related with a horse racing game is displayed on a screen in accordance with the central control computer, and when the racing starts, a screen information based on a racing path transferred from the central control computer is displayed on the screen; and
a sound output means in which various guide information related with the horse racing game and a racing broadcast information after the racing starts are outputted through speakers.

2. The apparatus of claim 1, wherein said terminal apparatus includes:
a data communication unit which is connected with the central control computer through the local network communication network and controls the inputs of a racing information, a probability information, etc. related with the horse racing game, the outputs of a betting information based on an operation of a user, and the inputs of a result data of the horse racing game with the input and output operations being performed with the central control computer;
a controller in which a display of a patting point obtained based on bills or coins inputted by users which play the horse racing game is controlled, and a screen display of a racing information, a probability information, etc. related with the horse racing game inputted from the central control computer through the data communication unit is controlled, and an operation, in which a betting information based on an operation of a user which plays the horse racing game is outputted to the central control computer, is controlled, and an operation, in which a winning state and a result process of the winning based on the betting of each user are displayed on the screen based on a result data inputted from the central control computer through the data communication unit, is controlled, and a discharge of a certain product coupon/coin is controlled based on an operation of a user which has a certain point;
a key input unit in which various key signals and a key signal related with the betting are outputted to the controller for checking a horse racing information, a probability information, etc. based on the operations of the users which play a horse racing game, and a key signal for pay-back of the product coupon/coin is outputted to the controller based on an operation of the user which plays the horse racing game;
a display unit in which a racing information, a probability information, etc. related with the horse racing game inputted from the central control computer is displayed on the screen in accordance with a control of the controller, and when the horse racing game is finished, a result data of the horse racing game, a winning state and a process result of the winning based on the betting of each user are displayed on the screen in accordance with a control of the controller;
a bill/coin input processing unit in which a face-value of a bill or a coin inputted through a bill input slit/coin input slip by the user which plays the horse racing game is checked and outputted to the controller; and
a product coupon/coin discharge processing unit in which a product coupon/coin requested by the user which has a certain point is discharged through the product coupon discharge slit/coin discharge slit in accordance with a control of the controller.

3. The apparatus of claim 1, wherein said central control computer includes:
a data communication unit which outputs a racing information, a probability information, etc. to the terminal apparatuses connected with the local network communication network, and inputs a betting information based on the operations of the users, and outputs a horse racing result data, and outputs a racing information and a probability information related with the horse racing game to the display means connected through the local network communication network, and outputs a screen information based on a racing path after the racing starts, and outputs a various guide information related with the horse racing game and a racing broadcast information after the racing starts through the sound output means connected through the local network communication network;
a main controller which controls that various racing information, probability information, etc. such as a start racing horse information, a horse information, an environment information, a recent racing information, a statistic information related with a probability and dividend, etc. are outputted to the terminal apparatus through the data communication unit when the racing starts, and controls that the betting information of the users, which play the horse racing game, transferred from the terminal apparatuses through the data communication unit are accumulated and stored, and when the betting of each user is finished, and the racing starts, the screen information and racing broadcast information based on the racing path are outputted to the display means and sound output means; and controls that when the racing is finished, a result data of the game is outputted to the terminal apparatuses;
a database which stores various racing information and probability information such as a start racing horse information, a horse information, an environment information, a recent racing information, a statistic information related with a probability and dividend, etc. which are provided to the users of the horse racing game, and stores various racing track information needed for an operation of the horse racing game, a screen information based on the racing path and a racing broadcast information; and
a racing processing unit which stores a simulation program for an operation of the horse racing game, and drives a simulation program in accordance with a control of the main controller, and processes a simulation of the horse racing game based on various racing tracks, a screen information based on the racing path and a racing broadcast information which are stored in the database.
